# NEUE EUROPÄISCHE PATENTSCHRIFT

(11) **EP 2 678 550 B2**
(45) Veröffentlichungstag und Bekanntmachung des Hinweises auf die Entscheidung über den Einspruch: **25.12.2019**
(45) Hinweis auf die Patenterteilung: 07.12.2016
(21) Anmeldenummer: 12721719.8
(22) Anmeldetag: 21.02.2012
(51) Int. Cl.: F02N 7/10, F02N 19/10

(54) **FAHRZEUG, INSBESONDERE MILITÄRISCHES FAHRZEUG, UND VERFAHREN ZUM TEMPERIEREN VON FAHRZEUGKOMPONENTEN**
VEHICLE, IN PARTICULAR A MILITARY VEHICLE, AND METHOD FOR CONTROLLING THE TEMPERATURE OF VEHICLE COMPONENTS
VÉHICULE, EN PARTICULIER VÉHICULE MILITAIRE, ET PROCÉDÉ POUR LA THERMORÉGULATION DE COMPOSANTS DE VÉHICULE

(30) Priorität: 25.02.2011 DE 102011000951
(43) Veröffentlichungstag der Anmeldung: 01.01.2014
(73) Patentinhaber: Krauss-Maffei Wegmann GmbH & Co. KG, 80997 München (DE)
(72) Erfinder: SCHABL, Hans, 80997 München (DE); MAAHS, Sebastian, 80997 München (DE)
(74) Vertreter: Feder Walter Ebert
(86) Internationale Anmeldenummer: PCT/DE2012/100043
(87) Internationale Veröffentlichungsnummer: WO 2012/113391

(56) Entgegenhaltungen:
- WO-A2-02/40845
- CA-A1- 2 326 299
- DE-A1- 2 128 443
- JP-A- 4 320 767
- US-A- 4 762 170

## Beschreibung

Die Erfindung betrifft ein Fahrzeug, insbesondere ein militärisches Fahrzeug, mit einem Triebwerk, einem Triebwerk-Wärmekreislauf zum Temperieren des Triebwerks, einem Stromerzeuger, welcher einen Hilfsmotor aufweist und einem Stromerzeuger-Wärmekreislauf zum Temperieren des Hilfsmotors. Ferner betrifft die Erfindung ein Verfahren zum Temperieren einer Fahrzeugkomponente eines solchen Fahrzeugs.

Fahrzeuge weisen typischerweise ein Triebwerk zum Antrieb des Fahrzeugs auf, welches sich während des Betriebs erwärmt. Das Triebwerk kann neben einem Antriebsmotor weitere für den Antrieb erforderliche Fahrzeugkomponenten, insbesondere ein Getriebe, aufweisen. Zur Kühlung des Triebwerks ist oftmals ein thermisch mit dem Triebwerk gekoppelter Triebwerk-Wärmekreislauf vorgesehen, in dem ein Wärmemittel wie Wasser oder Öl zirkuliert. Die Abwärme des Triebwerks wird auf das Wärmemittel übertragen, aus dem Triebwerk abgeleitet und beispielsweise durch einen Kühler an die Umgebungsluft abgegeben.

Zudem kann es, insbesondere bei einem Fahrzeug mit einem dieselbetriebenen Triebwerk, bei kalten Umgebungsbedingungen erforderlich sein, das Triebwerk vor einem Kaltstart mittels des Triebwerk-Wärmekreislaufs vorzuwärmen, um das Starten des Triebwerks zu ermöglichen. Dazu kann das Wärmemittel des Triebwerk-Wärmekreislaufs mittels eines Wärmeerzeugers aufgeheizt werden und Wärme von dem Wärmemittel auf das Triebwerk übertragen werden.

Im Hinblick auf das Vorheizen des Triebwerks hat es sich insbesondere bei militärischen Fahrzeugen, bei welchen eine hohe Verfügbarkeit des Triebwerks erforderlich ist, um das Fahrzeug und die Besatzung aus Gefahrensituationen entfernen zu können, als nachteilig erwiesen, dass bei einem Ausfall des Wärmerzeugers ein Starten des Triebwerks bei sehr kalten Umgebungstemperaturen nicht möglich ist, da die erforderliche Wärme in diesem Fall nicht bereitgestellt werden kann. Von Nachteil beim Starten des Triebwerks bei kalten Umgebungsbedingungen ist ferner, dass der Vorheizvorgang zeitaufwändig ist und die für den Betrieb des Wärmeerzeugers erforderliche Energie aus einer Bordnetzbatterie entnommen werden muss.

Während des Fahrbetriebs kann mittels des Triebwerks ferner Energie zur Versorgung des Fahrzeugs, beispielsweise zum Betrieb einer Innenraumheizung, einer Klimaanlage oder einer Hydraulikpumpe, bereitgestellt werden. Um das Fahrzeug allerdings auch bei abgeschaltetem Triebwerk ausreichend mit elektrischer Energie versorgen zu können, weisen insbesondere militärische Fahrzeuge oftmals einen Stromerzeuger mit einem Hilfsmotor auf, welcher nicht dem Antrieb des Fahrzeugs dient, sondern einen mit dem Hilfsmotor gekoppelten Generator zur Stromerzeugung antreibt. Ein solcher Stromerzeuger kann als Nachrüstteil ausgebildet sein und weist in der Regel einen Stromerzeuger-Wärmekreislauf zur Temperierung des Hilfsmotors auf, mittels dem der Hilfsmotor des Stromerzeugers während des Betriebs gekühlt und ggf. vor dem Starten vorgewärmt werden kann.

Es sind somit in einem solchen Fahrzeug mit derartigem Stromerzeuger zur Temperierung der Fahrzeugkomponenten, insbesondere des Triebwerks, der Innenraumheizung, des Hilfsmotors und des Generators mehrere Wärmekreisläufe vorgesehen, die jeweils durch einen abgeschlossenen Wärmefluss gekennzeichnet sind und zugehörige Wärme- bzw Kühlaggregate aufweisen, so wie in WO 02/40845 A2 beschrieben.

Aufgabe der Erfindung ist es, den Wärmefluss in dem Fahrzeug zu verbessern.

Bei einem Fahrzeug der eingangs genannten Art wird die Aufgabe mit den Merkmalen des Anspruchs 1 gelöst.

Erfindungsgemäß ist der Stromerzeuger-Wärmekreislauf mit dem Triebwerk-Wärmekreislauf zum Austausch von Wärme thermisch koppelbar.

Durch die Kopplung der Wärmekreisläufe des Triebwerks und des Stromerzeugers kann Wärme zwischen dem Triebwerk und dem Stromerzeuger in beiden Richtungen ausgetauscht werden, so dass sich ein verbesserter Wärmefluss ergibt. Bei einem Wärmekreislauf mit einem nicht oder nicht vollständig einsatzfähigen Wärmeerzeuger kann die in dem jeweils anderen Wärmekreislauf enthaltene Wärme durch die Kopplung nach Art einer redundanten oder zusätzlichen Wärmequelle genutzt werden. So kann die Abwärme des Triebwerks in den Stromerzeuger-Wärmekreislauf überführt werden, um das Triebwerk zu kühlen und/oder den Hilfsmotor vorzuwärmen. Analog kann die Abwärme des Hilfsmotors aus dem Stromerzeuger-Wärmekreislauf in den Triebwerk-Wärmekreislauf eingebracht werden, um das Triebwerk vorzuwärmen und/oder den Hilfsmotor zu kühlen. Ferner ist es aufgrund der Kopplung nicht zwingend erforderlich, im Triebwerk-Wärmekreislauf und im Stromerzeuger-Wärmekreislauf jeweils Wärmeaggregate vorzusehen, so dass die Anzahl an Wärmeaggregaten in dem Fahrzeug verringert werden kann.

Erfindungsgemäß ist ein Wärmetauscher zur Kopplung des Triebwerk-Wärmekreistaufs mit dem Stromerzeuger-Wärmekreislauf vorgesehen. In einem Wärmetauscher kann ein Austausch von thermischer Energie zwischen den Wärmekreisläufen stattfinden, ohne dass das in den Wärmekreisläufen enthaltene Wärmemittel zwischen den Wärmekreisläufen ausgetauscht werden müsste. Die Wärmekreisläufe können somit geschlossen ausgebildet sein, so dass das Wärmemittel zum Transport der Wärme in dem jeweiligen Wärmekreislauf zirkulieren kann. Bevorzugt besteht das Wärmemittel aus einer Kühlflüssigkeit, insbesondere Wasser, wodurch ein gleichmäßiger Wärmetransport ermöglicht wird und gleichzeitig eine große Menge an Wärme transportieren werden kann. Um die Gefahr des Einfrierens des Wärmemittels bei Kälte zu verringern, kann das Wärmemittel ein Frostschutzmittel aufweisen.

Erfindungsgemäß weist der Stromerzeuger-Wärmekreislauf einen Kühler zum Abführen von Wärme an die Umgebungsluft auf. Mittels des Kühlers kann die Abwärme des Triebwerks und/oder des Hilfsmotors auf die Umgebungsluft übergehen. In analoger Weise kann auch der Triebwerk-Wärmekreislauf einen Triebwerk-Kühler aufweisen.

Erfindungsgemäß ist der Stromerzeuger-Wärmekreislauf derart ausgebildet, dass entweder der Kühler oder der Hilfsmotor mit dem Triebwerk-Wärmekreislauf koppelbar ist. Besonders bevorzugt ist es, wenn wahlweise der Kühler mit dem Triebwerk-Wärmekreislauf koppelbar ist oder der Hilfsmotor mit dem Triebwerk-Wärmekreislauf koppelbar ist oder der Kühler und der Hilfsmotor gemeinsam mit dem Triebwerk-Wärmekreislauf koppelbar sind. Wird der Kühler mit dem Triebwerk-Wärmekreislauf gekoppelt und der Hilfsmotor von dem Triebwerk-Wärmekreislauf entkoppelt, so kann die Kühlleistung gesteigert werden, da das Wärmemittel des Stromerzeuger-Wärmekreislaufs nicht durch den Hilfsmotor geführt werden muss, der Restwärme abgeben kann. Wird der Hilfsmotor mit dem Triebwerk-Wärmekreislauf gekoppelt und der Kühler von dem Triebwerk-Wärmekreislauf entkoppelt, so kann das Verhalten beim Vorwärmen verbessert werden, da das Wärmemittel nicht durch den Kühler geführt wird und somit keine Wärme im Kühler abgeben kann.

In diesem Zusammenhang hat es sich als vorteilhaft erwiesen, ein Schaltventil vorzusehen, welches mindestens zwei Schaltstellungen aufweist, wobei in einer ersten Schaltstellung der Hilfsmotor zum Vorheizen des Triebwerks thermisch mit dem Triebwerk-Wärmekreislauf gekoppelt ist und in einer zweiten Schaltstellung der Kühler des Stromerzeugers zum Kühlen des Triebwerks thermisch mit dem Triebwerk-Wärmekreislauf gekoppelt ist. Durch Umschalten des Schaltventils kann die thermische Kopplung des Triebwerk-Wärmekreislaufs mit dem Stromerzeuger-Wärmekreislauf an den Betriebszustand des Fahrzeugs angepasst werden. Bevorzugt ist in der ersten Schaltstellung, in welcher der Hilfsmotor mit dem Triebwerk-Wärmekreislauf gekoppelt ist, der Kühler des Stromerzeuger-Wärmekreislaufs nicht mit dem Triebwerk-Wärmekreislauf verbunden. Weiter bevorzugt ist in der zweiten Schaltstellung der Kühler, nicht aber der Hilfsmotor mit dem Triebwerk-Wärmekreislauf gekoppelt. Ferner kann eine dritte Schaltstellung vorgesehen sein, in welcher der Hilfsmotor mit dem Kühler des Stromerzeugers thermisch gekoppelt ist und keine thermische Verbindung mit dem Triebwerk-Wärmekreislauf besteht, so dass ein getrennter Betrieb der Wärmekreisläufe ermöglicht wird.

Das Schaltventil kann derart ausgebildet sein, dass sich ein vorgegebener Volumenstrom eines Wärmemittels durch das Schaltventil bewegen kann. Vorteilhaft ist es jedoch, wenn der Volumenstrom eines durch das Schaltventil strömenden Wärmemittels durch das Schaltventil steuerbar ist. Anhand der Steuerung des Volumenstroms kann der Wärmefluss zwischen dem Triebwerk-Wärmekreislauf und dem Stromerzeuger-Wärmekreislauf verändert werden, so dass eine Feineinstellung des Wärmeflusses ermöglicht wird.

Um Wärme in die Wärmekreisläufe des Fahrzeugs einzubringen, kommen neben dem Triebwerk und dem Hilfsmotor, deren Abwärme genutzt werden kann, weitere Wärmequellen in Betracht. So ist gemäß einer weiteren vorteilhaften Ausgestaltung ein Wärmeerzeuger zur Erzeugung und Einbringung von Wärme in den Triebwerk-Wärmekreislauf und/oder den Stromerzeuger-Wärmekreislauf vorgesehen. Mittels eines Wärmeerzeugers können Fahrzeugkomponenten auch dann gewärmt werden, wenn keine Abwärme des Triebwerks und/oder des Hilfsmotors zur Verfügung steht. Der Wärmeerzeuger kann insbesondere als elektrisches Heizgerät, insbesondere als Standheizgerät, ausgebildet sein.

Wie weiter oben in Zusammenhang mit einem Wärmetauscher bereits beschrieben, können die Wärmekreisläufe des Fahrzeugs direkt miteinander gekoppelt werden. In alternativer Ausgestaltung hat sich ebenfalls als vorteilhaft erwiesen, einen Zwischen-Wärmekreislauf zur Kopplung des Triebwerk-Wärmekreislaufs mit dem Stromerzeuger-Wärmekreislauf vorzusehen. In einem Zwischen-Wärmekreislauf können von dem Triebwerk-Wärmekreislauf und dem Stromerzeuger-Wärmekreislauf gemeinsam genutzte Aggregate zum Heizen und/oder Kühlen angeordnet sein. Ferner kann thermische Energie mittels eines Zwischen-Wärmekreislaufs zwischen dem Triebwerk-Wärmekreislauf und dem Stromerzeuger-Wärmekreislauf übertragen werden, ohne dass eine direkte Kopplung dieser Kreisläufe miteinander erforderlich ist. Der Zwischen-Wärmekreislauf kann ein Wärmemittel zum Transport der Wärme aufweisen, welches bevorzugt in gleicher Weise wie das Wärmemittel des Triebwerk-Wärmekreislaufs und/oder des Stromerzeuger-Wärmekreislaufs ausgebildet ist. Die Kopplung des Zwischen-Wärmekreislaufs einerseits mit dem Triebwerk-Wärmekreislauf und andererseits mit dem Stromerzeuger-Wärmekreislauf kann mittels zweier Wärmetauscher erfolgen, wobei ein Wärmetauscher den Triebwerk-Wärmekreislauf mit dem Zwischen-Wärmekreislauf und ein zweiter Wärmetauscher den Zwischen-Wärmekreislauf mit dem Stromerzeuger-Wärmekreislauf koppeln kann.

Zusätzlich zu einem Wärmetauscher und/oder einem Zwischen-Wärmekreislauf können zur Kopplung der Wärmekreisläufe auch weitere Kupplungselemente verwendet werden. So wird gemäß einer konstruktiven Ausgestaltung eine Wärmekreislauf-Kupplung zur Kopplung des Triebwerk-Wärmekreislaufs mit dem Stromerzeuger-Wärmekreislauf vorgeschlagen, wodurch das Koppeln und Trennen der Wärmekreisläufe auf einfache Weise ermöglicht wird. Besonders vorteilhaft ist in diesem Zusammenhang eine Ausgestaltung, bei die Kupplung in dem Zwischen-Wärmekreislauf angeordnet ist, so dass der Zwischen-Wärmekreislauf zur Entnahme des Triebwerks aus dem Fahrzeug getrennt werden kann. Durch das Auftrennen des Zwischen-Wärmekreislaufs kann das Triebwerk zur Wartung und/oder Instandsetzung auf einfache Weise aus dem Fahrzeug entnommen werden. Alternativ, aber nicht erfindungsgemäß, können der Triebwerk-Wärmekreislauf und/oder der Stromerzeuger-Wärmekreislauf und/oder der Zwischen-Wärmekreislauf anstatt einer Kopplung durch einen Wärmetauscher mittels einer Wärmekreislauf-Kupplung gekoppelt werden, so dass sich eine direkte Verbindung der Wärmekreisläufe ergibt.

In weiterer vorteilhafter Ausgestaltung kann ein mit dem Triebwerk-Wärmekreislauf und/oder dem Stromerzeuger-Wärmekreislauf thermisch koppelbarer Heizungs-Wärmekreislauf zum Heizen eines Fahrzeuginnenraums vorgesehen sein. Durch die Verbindung mit einem Heizungs-Wärmekreislauf kann die Abwärme des Triebwerks und/oder des Hilfsmotors zum Temperieren des Fahrzeuginnenraums genutzt werden. Es ist somit nicht erforderlich, ein separates Heizgerät für den Heizungs-Wärmekreislauf vorzusehen. Bevorzugt ist der Heizungs-Wärmekreislauf derart mit dem Zvvischen-Wärmekreislauf gekoppelt, dass Wärme aus dem Triebwerk-Wärmekreislauf und/oder dem Stromerzeuger-Wärmekreislauf auf den Heizungs-Wärmekreislauf übertragen werden kann.

Bei einem Verfahren zum Temperieren einer Fahrzeugkomponente der eingangs genannten Art wird Wärme zwischen dem Stromerzeuger-Wärmekreislauf und der Fahrzeugkomponente ausgetauscht.

Durch den Austausch von Wärme zwischen dem Stromerzeuger-Wärmekreislauf und der Fahrzeugkomponente ergibt sich ein verbesserter Wärmefluss in dem Fahrzeug. Die Abwärme des Hilfsmotors kann aus dem Stromerzeuger-Wärmekreislauf auf die Fahrzeugkomponente übertragen werden, um den Hilfsmotor zu kühlen und/oder die Fahrzeugkomponente anzuwärmen. Ferner kann Wärme von der Fahrzeugkomponente in den Stromerzeuger-Wärmekreislauf eingebracht werden, um die Fahrzeugkomponente zu kühlen und/oder den Hilfsmotor des Stromerzeugers anzuwärmen. Ferner ist es aufgrund des Wärmeaustausches nicht erforderlich, im Stromerzeuger-Wärmekreislauf und an der Fahrzeugkomponente jeweils Wärmeaggregate vorzusehen, so dass die Anzahl an Wärmeaggregaten in dem Fahrzeug verringert werden kann.

Nachfolgend sollen bevorzugte Ausgestaltungen des Verfahrens dargestellt werden, welche Vorteile zur Temperierung einzelner Fahrzeugkomponenten mit sich bringen.

In einer ersten vorteilhaften Ausgestaltung wird zum Vorwärmen des Triebwerks die Abwärme des Hilfsmotors aus dem Stromerzeuger-Wärmekreislauf in den Triebwerk-Wärmekreislauf eingebracht. Auf diese Weise kann das Triebwerk durch die Abwärme des Stromerzeugers auf eine für das Starten des Triebwerks ausreichende Temperatur aufgeheizt werden. Ferner kann das Triebwerk nach dem Abschalten auf Betriebstemperatur gehalten werden, so dass ein Vorheizen des Triebwerks beim erneuten Starten nicht erforderlich ist und die Anzahl das Triebwerk stark verschleißender Kaltstarts verringert wird.

In einer weiteren Ausgestaltung kann vorgesehen sein, dass zum Kühlen des Triebwerks die Abwärme des Triebwerks aus dem Triebwerk-Wärmekreislauf mittels eines Kühlers des Stromerzeuger-Wärmekreislaufs an die Umgebungsluft abgegeben wird. Durch die Übertragung der Abwärme des Triebwerks auf den Stromerzeuger-Wärmekreislauf kann die Kühlleistung erhöht werden und ein Hitzestau nach dem Abstellen des Triebwerks vermieden werden.

Es ist ferner vorteilhaft, wenn zum Heizen eines Innenraums des Fahrzeugs die Abwärme des Hilfsmotors aus dem Stromerzeuger-Wärmkreislauf in einen Heizungs-Wärmekreislauf eingebracht wird. Das Auskoppeln von Wärme aus dem Stromerzeuger-Wärmekreislauf bringt den Vorteil mit sich, dass es nicht erforderlich ist, einen Wärmeerzeuger zum Heizen des Innenraums vorzusehen. Somit kann eine effiziente Temperierung des Fahrzeuginnenraums ermöglicht werden.

Besonders vorteilhaft ist es, wenn zum Vorwärmen des Hilfsmotors die Abwärme des Triebwerks in den Stromerzeuger-Wärmekreislauf eingebracht wird oder dass von einem Wärmeerzeuger außerhalb des Stromerzeuger-Wärmekreislaufs erzeugte Wärme in den Stromerzeuger-Wärmekreislauf eingebracht wird. Durch das Einkoppeln von Wärme in den Wärmekreislauf des Stromerzeugers eingebracht wird, kann der Hilfsmotor auf einfache Weise vorgewärmt und/oder auf Betriebstemperatur gehalten werden. Es ist nicht erforderlich, einen Wärmeerzeuger zum Vorwärmen des Hilfsmotors in dem Stromerzeuger-Wärmekreislauf vorzusehen.

Zusätzlich zu den vorstehend beschriebenen vorteilhaften Ausgestaltungen des Verfahrens können ferner die im Zusammenhang mit dem Fahrzeug beschriebenen vorteilhaften Ausgestaltungen auch bei dem erfindungsgemäßen Verfahren zur Anwendung kommen.

Weitere Vorteile und Einzelheiten der Erfindung werden nachfolgend unter Zuhilfenahme der beigefügten Zeichnungen erläutert. In diesen zeigt
- Fig. 1: in vereinfachter Darstellung mehrere Fahrzeugkomponenten und Wärmekreisläufe eines Fahrzeugs,
- Fig. 2: in schematischer Darstellung verschiedene Schaltstellungen des Umschalthahns aus der Fig. 1 und
- Fig. 3: in schematischer Darstellung verschiedene Schaltstellungen des Umschaltventils aus der Fig. 1.

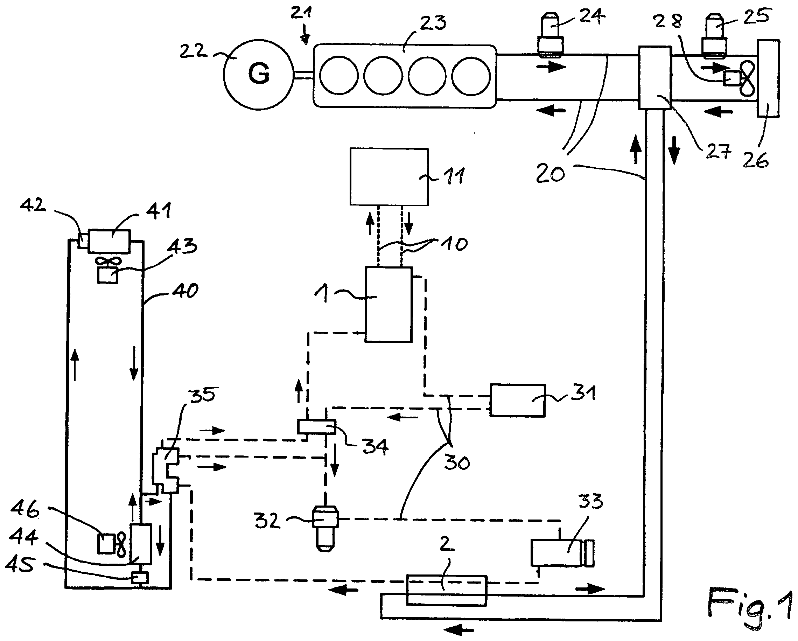

In der Fig. 1 ist der Wärmefluss in einem militärischen Fahrzeug anhand der schematischen Abbildung ausgewählter Fahrzeugkomponenten 11, 21, 41, 44 sowie der mit diesen gekoppelten Wärmekreisläufe 10, 20, 30, 40 dargestellt. Das Fahrzeug weist ein Triebwerk 11 zum Antrieb des Fahrzeugs und einen insbesondere als Nachrüstteil ausgebildeten Stromerzeuger 21 zur Versorgung des Fahrzeugs mit elektrischer Energie bei abgeschaltetem Triebwerk 11 auf. Zum Wärmetransport sind ein mit dem Triebwerk 11 gekoppelter Triebwerks-Wärmekreislauf 10 sowie ein mit dem Stromerzeuger 21 gekoppelter Stromerzeuger-Wärmekreislauf 20 vorgesehen, welche, wie im Weiteren näher beschrieben werden wird, gemäß der Erfindung thermisch miteinander koppelbar sind, um den Wärmefluss in dem Fahrzeug gegenüber herkömmlichen Fahrzeugen zu verbessern.

Bevor jedoch auf die Kopplung der Wärmekreisläufe 10, 20 eingegangen wird, soll zunächst anhand der Fig. 1 das Triebwerk 11 des Fahrzeugs näher beschrieben werden:
Das Triebwerk 11 des Fahrzeugs weist neben einem als Verbrennungsmotor ausgebildeten Antriebsmotor ein mit dem Antriebsmotor verbundenes Getriebe auf. Um der Erwärmung des Triebwerks 11 im Fahrbetrieb entgegenzuwirken und das Triebwerk 11 zu kühlen, ist dieses thermisch mit dem Triebwerk-Wärmekreislauf 10 verbunden, so dass die Abwärme des Triebwerks 11 in den Triebwerk-Wärmekreislauf 10 eingekoppelt wird. Der Triebwerk-Wärmekreislauf 10 ist als geschlossener Kreislauf ausgebildet und mit einem Wärmemittel zum Transport der Wärme, z.B. einem Gemisch aus Wasser und Frostschutzmittel, gefüllt, wodurch ein gleichmäßiger Wärmetransport ermöglicht und gleichzeitig die Gefahr des Einfrierens des Wärmemittels bei Kälte verringert wird.

Bei kalten Umgebungsbedingungen ist es zum Starten des dieselbetrieben Triebwerks 11 erforderlich, das Triebwerk 11 auf eine vorgegebene Temperatur vorzuwärmen. Daher kann der Triebwerk-Wärmekreislauf 10 zum Vorwärmen des Triebwerks 11 mit aufgeheiztem Wärmemittel durchströmt werden, so dass Wärme von dem Wärmemittel auf das Triebwerk 11 übertragen wird und sich das Triebwerk 11 infolgedessen erwärmt.

Alternativ kann das Fahrzeug zum Kühlen des Triebwerks 11 einen von dem Triebwerk-Wärmekreislauf 10 unabhängigen Kühlkreislauf aufweisen, welcher thermisch mit dem Triebwerk 11 gekoppelt ist. Gemäß einer solchen Abwandlung des Ausführungsbeispiels kann der Triebwerk-Wärmekreislauf 10 vornehmlich zum Vorwärmen des Triebwerks 11 verwendet werden.

In dem Ausführungsbeispiel weist der Triebwerk-Wärmekreislauf 10 überdies einen Wärmetauscher 1 auf, welcher den Austausch von thermischer Energie zwischen dem Triebwerk-Wärmekreislauf 10 und einem Zwischen-Wärmekreislauf 30 ermöglicht ohne dass Wärmemittel zwischen den beiden Wärmekreisläufen ausgetauscht werden müsste. Daher ist der Zwischen-Wärmekreislauf 30 ebenso wie der Triebwerk-Wärmekreislauf 10 geschlossen ausgebildet und mit einem Wärmemittel gefüllt, welches aus einem Gemisch aus Wasser und Frostschutzmittel besteht.

Der Zwischen-Wärmekreislauf 30 weist ferner einen Ölbehälter 31, eine Wärmekreislauf-Kupplung 34, eine Umwälzpumpe 32, einen als Heizgerät 33 ausgebildeten Wärmeerzeuger sowie einen Umschalthahn 35 auf. Darüber hinaus weist der Zwischen-Wärmekreislauf 30 einen aus Gründen der Übersichtlichkeit nicht dargestellten Ausgleichsbehälter für das Wärmemittel auf, um temperaturabhängige Änderungen des Volumens des Wärmemittels auszugleichen.

In dem Ölbehälter 31 wird durch das Triebwerk 11 erwärmtes Motoröl aufgefangen. Der Ölbehälter 31 ist nach Art eines Wärmetauschers ausgebildet, welcher es ermöglicht, Wärme von dem Motoröl auf das Wärmemittel des Zwischen-Wärmekreislaufs 30 zu übertragen und das Motoröl somit zu kühlen.

Durch die Wärmekreislauf-Kupplung 34 wird es ermöglicht, dass der Zwischen-Wärmekreislauf 30 zur Wartung des Triebwerks 11 auf einfache Weise in zwei Teile aufgetrennt werden kann. Der Teil des Zwischen-Wärmekreislaufs 30, welcher den Wärmetauscher 1 und den Ölbehälter 31 aufweist, kann als Teil eines den Antriebsmotor und das Getriebe umfassenden Triebwerksblocks aus dem Fahrzeug entnommen werden. Der andere Teil, welcher das Heizgerät 33 und die Pumpe 32 aufweist, verbleibt beim Ausbau des Triebwerksblocks im Fahrzeug. Um ein besonders schnelles Auftrennen des Zwischen-Wärmekreislaufs 30 zu ermöglichen, ist die Wärmekreislauf-Kupplung 34 nach Art einer Schnelltrennkupplung ausgebildet. Im eingebauten Zustand des Triebwerks 11 sind die vorgenannten Teile des Zwischen-Wärmekreislaufs 30 mittels der Schnelltrennkupplung 34 zu einem geschlossenen Kreislauf miteinander verbunden. Dabei wird das Wärmemittel durch die Umwälzpumpe 32 befördert.

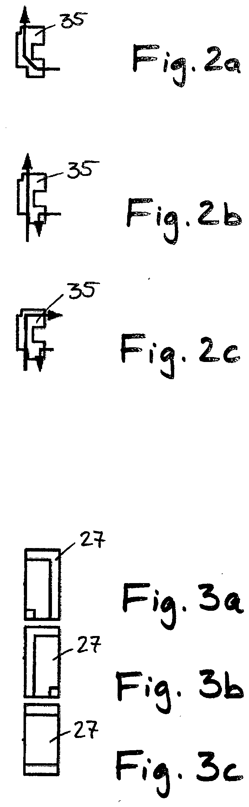

Zum Vorwärmen des Triebwerks 11 ist ferner das als Brennstoffheizung ausgebildete Heizgerät 33 innerhalb des Zwischen-Wärmekreislaufs 30 angeordnet. Im Vorwärmbetrieb, in welchem das Triebwerk 11 auf eine für das Starten des Triebwerks 11 ausreichende Temperatur angewärmt wird, ist der Umschalthahn 35 in eine Stellung gemäß Fig. 2a verbracht. In dieser Stellung kann das von dem Heizgerät 33 aufgewärmte Wärmemittel des Zwischen-Wärmekreislaufs 30 durch den Umschalthahn 35, die Schnelltrennkupplung 34 zu dem Wärmetauscher 1 befördert werden. Im Wärmetauscher 1 wird dem Wärmemittel Wärme entzogen und an das Wärmemittel des Triebwerk-Wärmekreislaufs 10 abgegeben. Ausgehend von dem Wärmetauscher 1 wird das abgekühlte Wärmemittel des Zwischen-Wärmekreislaufs 30 weiter durch den Ölbehälter 31, die Schnelltrennkupplung 34 sowie die Umwälzpumpe 32 zu dem Heizgerät 33 befördert.

Ferner kann das Triebwerk 11 nach herkömmlicher Art gekühlt werden, indem der Umschalthahn 35 in eine Stellung gemäß Fig. 2b verbracht wird. Die beim Betrieb des Triebwerks 11 auftretende Abwärme wird dann über den Wärmetauscher 1 in den Zwischen-Wärmekreislauf 30 eingekoppelt und über einen nicht dargestellten Kühler des Zwischen-Kreislaufs 30 zumindest teilweise an die Umgebungsluft abgegeben.

Gemäß der Erfindung ist das Fahrzeug hinsichtlich des Wärmeflusses derart gestaltet, dass der Triebwerk-Wärmekreislauf 10 mittels des Wärmetauschers 1, des Zwischen-Wärmekreislaufs 30 sowie eines weiteren Wärmetauschers 2 mit dem Wärmekreislauf 20 des Stromerzeugers 21 thermisch koppelbar ist, wodurch ein Austausch von Wärme zwischen dem Triebwerks-Wärmekreislauf 10 und dem Stromerzeuger-Wärmekreislauf 20 des Stromerzeugers 21 ermöglicht wird und sich ein gegenüber herkömmlichen Fahrzeugen verbesserter Wärmefluss ergibt.

Wie der Fig. 1 zu entnehmen, weist der insbesondere nachrüstbare Stromerzeuger 21 einen Hilfsmotor 23 sowie einen mechanisch mit dem Hilfsmotor 23 gekoppelten Generator 22 auf, welcher als Drehstromgenerator ausgebildet ist. Der Generator 22 kann mit einem Gleichrichter verbunden sein, so dass den mit dem Stromerzeuger 21 verbundenen elektrischen Fahrzeugkomponenten eine Gleichspannung bereitgestellt werden kann.

Zur Temperierung des Hilfsmotors 23 ist der Stromerzeuger-Wärmekreislauf 20 vorgesehen, welcher thermisch mit dem Hilfsmotor 23 gekoppelt ist. Optional kann der Stromerzeuger-Wärmekreislauf auch mit dem Generator 22 thermisch verbunden sein. Der Stromerzeuger-Wärmekreislauf 20 weist zwei Umwälzpumpen 24, 25 auf, mittels denen das aus Wasser und Frostschutzmittel bestehende Wärmemittel des Stromerzeuger-Wärmekreislaufs 20 transportiert wird. Ferner ist in dem Stromerzeuger-Wärmekreislauf 20 ein Kühler 26 mit einem Gebläse 28 vorgesehen, durch den die von dem Wärmemittel transportierte Wärme an die Umgebungsluft abgegeben werden kann. Darüber hinaus weist der Stromerzeuger-Wärmekreislauf 20 ein Schaltventil 27 auf, durch welches der Fluss des Wärmemittels im Stromerzeuger-Wärmekreislauf 20 gesteuert und an den Betriebszustand des Fahrzeugs angepasst werden kann.

Das Umschaltventil 27 weist drei Schaltstellungen auf, wobei in einer ersten Schaltstellung der Hilfsmotor 23 zum Vorheizen des Triebwerks 11 thermisch mit dem Triebwerk-Wärmekreislauf 10 gekoppelt ist, in einer zweiten Schaltstellung der Kühler 26 zum Kühlen des Triebwerks 11 thermisch mit dem Triebwerk-Wärmekreislauf 10 gekoppelt ist und in einer dritten Schaltstellung der Hilfsmotor 23 thermisch mit dem Kühler 26 gekoppelt ist und keine thermische Verbindung zwischen Hilfsmotor 23 oder Kühler 26 und dem Triebwerk-Wärmekreislauf 10 besteht.

Bei einem Ausfall des Heizgeräts 33 in dem Zwischen-Wärmekreislauf 30 kann somit mittels des Umschaltventils 27 die Abwärme des Hilfsmotors 23 in den Zwischen-Wärmekreislauf 30 und den Triebwerk-Wärmekreislauf 10 eingebracht werden, so dass der Hilfsmotor 23 eine redundante Wärmequelle darstellt. Im Falle eines defekten Kühlers des Zwischen-Wärmekreislaufs 30 kann mittels des Umschaltventils 27 der Kühler 26 des Stromerzeuger-Wärmekreislaufs 20 als redundante Wärmesenke mit dem Zwischen-Wärmekreislauf 30 gekoppelt werden. Diese Betriebszustände können auch bei einem funktionstüchtigen Heizgerät 33 und/oder Kühler im Zwischen-Wärmekreislauf 30 hergestellt werden, um den Heizgerät 33 bzw. den Kühler des Zwischen-Wärmekreislaufs 30 zu unterstützen, und sollen nachfolgend näher erläutert werden.

Zum Vorwärmen des Triebwerks 11 kann die Abwärme des Hilfsmotors 23 von dem Stromerzeuger-Wärmekreislauf 20 in den Triebwerk-Wärmekreislauf 10 eingebracht werden. Dazu wird das Umschaltventil 27 des Stromerzeuger-Wärmekreislaufs 20 in die in der Fig. 3a dargestellte Stellung überführt. Die Abwärme des Hilfsmotors 23 wird auf das Wärmemittel des Stromerzeuger-Wärmekreislaufs 20 übertragen, welches über die Pumpe 24, das Umschaltventil 27 in den Wärmetauscher 2 eingebracht wird. Der Wärmetauscher 2 überträgt die Wärme in den Zwischen-Wärmekreislauf 30. Wenn sich der Umschalthahn 35 in einer Stellung gemäß Fig. 2a oder Fig. 2b befindet, kann die Abwärme des Hilfsmotors 23 weiter über den Zwischen-Wärmekreislauf 30 zu dem Wärmetauscher 1 transportiert werden und auf den Triebwerk-Wärmekreislauf 10 übertragen werden. Beim Vorwärmen des Triebwerks 11 mit der Abwärme des Hilfsmotors 23 ist es nicht erforderlich, dass das Heizgerät 33 des Zwischen-Wärmekreislaufs 30 aktiviert ist.

Zum Kühlen des Triebwerks 11 z.B. im Fahrbetrieb kann der Triebwerk-Wärmekreislauf 10 mit dem Stromerzeuger-Wärmekreislauf 20 gekoppelt werden. Im Gegensatz zum Vorwärmen des Triebwerks 11 befindet sich das Umschaltventil 27 jedoch in der Stellung gemäß Fig. 3b, in welcher das Wärmemittel des Stromerzeuger-Wärmekreislaufs 20 von dem Wärmetauscher 2 über die Umwälzpumpe 25 dem Kühler 26 des Stromerzeuger-Wärmekreislaufs 20 zugeführt wird. Gleichzeitig kann das Gebläse 28 aktiviert werden. Auf diese Weise kann das Triebwerk zusätzlich zu der Kühlung durch den Kühler des Zwischen-Wärmekreislaufs 30 durch den Kühler 26 des Stromerzeuger-Wärmekreislaufs 20 erfolgen.

Ferner kann auf diese Weise das Nachheizen des Triebwerks 11 verringert werden. Denn der hydraulisch betriebene Kühler des Zwischen-Wärmekreislaufs 30 läuft nur während des Betriebs des Triebwerks 11. Nach dem Abschalten des Triebwerks 11 steht die Kühlleistung dieses Kühlers nicht mehr zur Verfügung. Das Triebwerk 11 gibt allerdings noch während einer Zeitspanne von mindestens 30 Minuten nach dem Abstellen Restwärme ab, welche nunmehr durch die Kopplung des Triebwerk-Wärmekreislaufs 10 mit dem Stromerzeuger-Wärmekreislauf 20 an den Stromerzeuger-Wärmekreislauf 20 abgeführt werden kann. Auf diese Weise kann während des Nachheizens des Triebwerks 11 die Kühlung des Triebwerks 11 mittels des Kühlers 26 des Stromerzeugers 21 erfolgen.

Wird während des Betriebs des Triebwerks 11 das Umschaltventil 27 in die Stellung gemäß Fig. 3a überführt, so kann die Abwärme des Triebwerks 11 zum Vorwärmen des Hilfsmotors 23 des Stromerzeugers 21 verwendet werden. Falls das Triebwerk 11 nicht aktiv ist, kann in der Stellung des Umschaltventils 27 gemäß Fig. 3a alternativ von dem außerhalb des Stromerzeuger-Wärmekreislaufs 20 angeordneten Heizgerät 33 erzeugte Wärme zum Vorwärmen des Hilfsmotors 23 in den Stromerzeuger-Wärmekreislauf 20 eingebracht werden.

In der Stellung des Umschaltventils 27 gemäß Fig. 3c ist der Stromerzeuger-Wärmekreislauf 20 thermisch nicht mit dem Zwischen-Wärmekreislauf 30 verbunden. In diesem entkoppelten Zustand kann der Stromerzeuger 21, insbesondere der Hilfsmotor 23, mittels des Kühlers 26 gekühlt, aber nicht vorgewärmt werden.

Neben dem Triebwerk 11 und dem Hilfsmotor 23 können auch andere Fahrzeugkomponenten 41, 44 temperiert werden. So ist es beispielsweise möglich, mit der Abwärme des Triebwerks 11 den Innenraum des Fahrzeugs zu heizen. Dazu kann die Abwärme des Triebwerks 11 durch den Umschalthahn 35 einem Heizungs-Wärmekreislauf 40 zum Wärmen des Innenraums des Fahrzeugs zugeführt werden. Der Heizungs-Wärmekreislauf 40 durchläuft den Innenraum des Fahrzeugs und weist zwei als Radiatoren ausgebildete Heizkörper 41, 44 auf, wobei der eine Heizkörper 41 in einem Fahrerraum des militärischen Fahrzeugs und der andere Heizkörper 44 in einem von dem Fahrerraum getrennten Kampfraum des militärischen Fahrzeugs angeordnet ist, von welchem aus eine Waffe des Fahrzeugs bedient wird. Die Wärmeabgabe der Heizkörper 41, 44 kann unabhängig voneinander reguliert werden, indem der Durchfluss des Wärmemittels durch die Heizkörper 41, 44 über die Ventile 42, 45 eingestellt wird. Die erwärmte Umgebungsluft der Heizkörper 41, 44 kann mittels der Gebläse 43, 46 in den jeweiligen Innenraum des Fahrzeugs geleitet werden.

Anstatt die Abwärme des Triebwerks 11 in den Heizungs-Wärmekreislauf 40 einzuleiten, kann die Abwärme zur Temperierung anderer Fahrzeugkomponenten genutzt werden, indem über den Umschalthahn 35 ein mit der jeweiligen Fahrzeugkomponente gekoppelter Wärmekreislauf mit den Zwischen-Wärmekreislauf 30 verbunden wird.

Auch in dem Fall, in welchem das Triebwerk 11 des Fahrzeugs abgeschaltet ist und somit keine Abwärme erzeugt, kann der Innenraum des Fahrzeugs beheizt werden. Dazu wird der Umschalthahn 35 in eine Stellung gemäß Fig. 2c verbracht, in welcher die Schnelltrennkupplung 34, der Wärmetauscher 1 sowie der Ölbehälter 31 von dem Wärmemittel des Zwischen-Wärmekreislaufs 30 nicht durchflossen werden. Das Wärmemittel durchströmt in dieser Stellung des Umschalthahns 35 lediglich die Pumpe 32, das Heizgerät 33 sowie den Heizungs-Wärmekreislauf 40. Auf diese Weise kann die Heizung des Innenraums mittels des Heizgeräts 33 erfolgen.

In erfindungsgemäßer Weise kann zum Heizen des Innenraums des Fahrzeugs alternativ die Abwärme des Hilfsmotors 23 aus dem Stromerzeuger-Wärmekreislauf 20 in den Heizungs-Wärmekreislauf 40 überführt werden. Dabei befindet sich das Umschaltventil 27 in einer Stellung gemäß Fig. 3a und der Umschalthahn 35 in einer Stellung gemäß Fig. 2b bzw. Fig. 2c.

Die Steuerung des Umschalthahns 35 und des Umschaltventils 27 kann manuell oder durch eine Steuervorrichtung gesteuert erfolgen.

Durch die vorstehend beschriebene Kopplung der Wärmekreisläufe 10, 20 des Triebwerks 11 und des Stromerzeugers 21 kann Wärme zwischen dem Triebwerk 11 und dem Stromerzeuger 21 in beiden Richtungen ausgetauscht werden, so dass sich ein verbesserter Wärmefluss ergibt.

Insbesondere bei einem als Nachrüstteil ausgebildeten Stromerzeuger 21 ergeben sich durch die erfindungsgemäße Kopplung der Wärmekreisläufe 10, 20 zudem folgende Vorteile: Zum einen kann auf einen Wärmeerzeuger zum Vorheizen des Hilfsmotors 23 verzichtet werden, da hierzu die Abwärme des Triebwerks 11 und/oder die von dem Heizgerät 33 generierte Wärme genutzt werden kann, so dass der Stromerzeuger 21 eine geringere Baugröße aufweist sowie geringere Materialkosten verursacht. Zum anderen kann die Wahrscheinlichkeit erhöht werden, dass das Triebwerk 11 auch bei niedrigen Umgebungstemperaturen und/oder schlechtem Ladezustand einer Bordnetzbatterie oder eines Doppelschichtkondensators des Bordnetzes gestartet werden kann, da mittels des Heizgeräts 33 zunächst der Stromerzeuger 21 vorgewärmt und gestartet und dann mittels des Stromerzeugers 21 die Bordnetzbatterie oder der Doppelschichtkondensator auf ein zum Starten des Triebwerks 11 erforderliches Niveau geladen werden kann. Ferner ist durch die Kopplung nunmehr auch die Abwärme des Hilfsmotors 23 zum Vorwärmen des Triebwerks 11 nutzbar.

### Bezugszeichen:

- 1: Wärmetauscher
- 2: Wärmetauscher
- 10: Triebwerk-Wärmekreislauf
- 11: Triebwerk
- 20: Stromerzeuger-Wärmekreislauf
- 21: Stromerzeuger
- 22: Generator
- 23: Hilfsmotor
- 24: Pumpe
- 25: Pumpe
- 26: Kühler
- 27: Schaltventil
- 28: Gebläse
- 30: Zwischen-Wärmekreislauf
- 31: Ölbehälter
- 32: Pumpe
- 33: Heizgerät
- 34: Wärmekreislauf-Kupplung
- 35: Umschalthahn
- 40: Heizungs-Wärmekreislauf
- 41: Heizkörper
- 42: Ventil
- 43: Gebläse
- 44: Heizkörper
- 45: Ventil
- 46: Gebläse

## Patentansprüche

1. Fahrzeug, insbesondere militärisches Fahrzeug, mit einem Triebwerk (11), einem Triebwerk-Wärmekreislauf (10) zum Temperieren des Triebwerks (11), einem Stromerzeuger (21), welcher einen Hilfsmotor (23) aufweist, und einem Stromerzeuger-Wärmekreislauf (20) zum Temperieren des Hilfsmotors (23), wobei der Stromerzeuger-Wärmekreistauf (20) mit dem Triebwerk-Wärmekreistauf (10) zum Austausch von Wärme thermisch koppelbar ist,
**dadurch gekennzeichnet,**
**dass** der Stromerzeuger-Wärmekreislauf (20) einen Kühler (26) zum Abführen von Wärme an die Umgebungsluft aufweist und entweder der Kühler (26) oder der Hilfsmotor (23) des Stromerzeuger-Wärmekreislaufs (20) mit dem Triebwerk-Wärmekreislauf (10) koppelbar ist wobei ein Wärmetauscher (1, 2) zur Kopplung des Triebwerk-Wärmekreislaufs (10) mit dem Stromerzeuger-Wärmekreislauf (20) vorgesehen ist.

2. Fahrzeug nach Anspruch 1, **gekennzeichnet durch** ein Schaltventil (27) welches mindestens zwei Schaltstellungen aufweist, wobei in einer ersten Schaltstellung der Hilfsmotor (23) zum Vorheizen des Triebwerks (11) thermisch mit dem Triebwerk-Wärmekreislauf (10) gekoppelt ist und in einer zweiten Schaltstellung der Kühler (26) zum Kühlen des Triebwerks (11) thermisch mit dem Triebwerk-Wärmekreislauf (10) gekoppelt ist.

3. Fahrzeug nach Anspruch 2, **dadurch gekennzeichnet, dass** ein Volumenstrom eines durch das Schaltventil strömenden Wärmemittels durch das Schaltventil steuerbar ist.

4. Fahrzeug nach einem der vorhergehenden Ansprüche, **gekennzeichnet durch** einen Wärmeerzeuger (33) zur Erzeugung und Einbringung von Wärme in den Triebwerk-Wärmekreislauf (10) und/oder den Stromerzeuger-Wärmekreislauf (20).

5. Fahrzeug nach einem der vorhergehenden Ansprüche, **gekennzeichnet durch** einen Zwischen-Wärmekreislauf (30) zur Kopplung des Triebwerk-Wärmekreislaufs (10) mit dem Stromerzeuger-Wärmekreislauf (20).

6. Fahrzeug nach einem der vorhergehenden Ansprüche, **gekennzeichnet durch** eine Wärmekreislauf-Kupplung (34) zur Kopplung des Triebwerk-Wärmekreislaufs (10) mit dem Stromerzeuger-Wärmekreislauf (20).

7. Fahrzeug nach einem der vorhergehenden Ansprüche, **gekennzeichnet durch** einen mit dem Triebwerk-Wärmekreislauf (10) und/oder dem Stromerzeuger-Wärmekreislauf (20) thermisch koppelbaren Heizungs-Wärmekreislauf (40) zum Heizen eines Fahrzeuginnenraums.

## Claims

1. Vehicle, in particular military vehicle, having an engine (11), an engine thermal circuit (10) for controlling the temperature of the engine (11), a power generator (21) which has an auxiliary motor (23), and a power generator thermal circuit (20) for controlling the temperature of the auxiliary motor (23), wherein the power generator thermal circuit (20) can be thermally coupled to the engine thermal circuit (10) for exchanging heat, **characterized**
**in that** the power generator thermal circuit (20) has a radiator (26) for discharging heat to the surrounding air and either the radiator (26) or the auxiliary motor (23) of the power generator thermal circuit (20) can be coupled to the engine thermal circuit (10), wherein a heat exchanger (1, 2) for coupling the engine thermal circuit (10) to the power generator thermal circuit (20) is provided.

2. Vehicle according to claim 1, **characterized by** a switching valve (27) which has at least two switching positions, wherein the auxiliary motor (23) is thermally coupled to the engine thermal circuit (10) for preheating the engine (11) in a first switching position, and the radiator (26) is thermally coupled to the engine thermal circuit (10) for cooling the engine (11) in a second switching position.

3. Vehicle according to Claim 2, **characterized in that** a volume flow of a heating medium flowing through the switching valve can be controlled by the switching valve.

4. Vehicle according to one of the preceding claims, **characterized by** a heat generator (33) for generating heat and introducing heat into the engine thermal circuit (10) and/or the power generator thermal circuit (20).

5. Vehicle according to one of the preceding claims, **characterized by** an intermediate thermal circuit (30) for coupling the engine thermal circuit (10) to the power generator thermal circuit (20).

6. Vehicle according to one of the preceding claims, **characterized by** a thermal circuit clutch (34) for coupling the engine thermal circuit (10) to the power generator thermal circuit (20).

7. Vehicle according to one of the preceding claims, **characterized by** a heater thermal circuit (40), which can be thermally coupled to the engine thermal circuit (10) and/or to the power generator thermal circuit (20), for heating a vehicle interior.

## Revendications

1. Véhicule, en particulier véhicule militaire, avec un mécanisme propulseur (11), un circuit thermique de mécanisme propulseur (10) pour tempérer le mécanisme propulseur (11), un générateur de courant (21) qui présente un moteur auxiliaire (23) et un circuit thermique de générateur de courant (20) pour tempérer le moteur auxiliaire (23) dans lequel, le circuit thermique de générateur de courant (20) peut être couplé thermiquement au circuit thermique de mécanisme propulseur (10) pour échanger la chaleur, **caractérisé en ce que**
le circuit thermique de générateur de courant (20) présente un refroidisseur (26) pour l'évacuation de la chaleur dans l'air ambiant et le refroidisseur (26) ou le moteur auxiliaire (23) du circuit thermique de générateur de courant (20) peut être couplé au circuit thermique de mécanisme propulseur (10), dans lequel un échangeur de chaleur (1, 2) pour le couplage du circuit thermique de mécanisme propulseur (10) avec le circuit thermique de générateur de courant (20) est fourni.

2. Véhicule selon la revendication 1, **caractérisé par** une soupape de commutation (27) qui présente au moins deux positions de commutation, dans lequel dans une première position de commutation le moteur auxiliaire (23) est couplé thermiquement pour le préchauffage du mécanisme propulseur (11) au circuit thermique de mécanisme propulseur (10) et dans une seconde position de commutation, le refroidisseur (26) est couplé thermiquement pour le refroidissement du mécanisme propulseur (11) au circuit thermique de mécanisme propulseur (10).

3. Véhicule selon la revendication 2, **caractérisé en ce qu'**un débit volumique d'un agent thermique s'écoulant par la soupape de commutation peut être commandé par la soupape de commutation.

4. Véhicule selon l'une quelconque des revendications précédentes, **caractérisé par** un générateur de chaleur (33) pour la génération et l'introduction de chaleur dans le circuit thermique de mécanisme propulseur (10) et/ou le circuit thermique de générateur de courant (20).

5. Véhicule selon l'une quelconque des revendications précédentes, **caractérisé par** un circuit thermique intermédiaire (30) pour le couplage du circuit thermique de mécanisme propulseur (10) avec le circuit thermique de générateur de courant (20).

6. Véhicule selon l'une quelconque des revendications précédentes, **caractérisé par** un couplage de circuit thermique (34) pour le couplage du circuit thermique de mécanisme propulseur (10) avec le circuit thermique de générateur de courant (20).

7. Véhicule selon l'une quelconque des revendications précédentes, **caractérisé par** un circuit thermique (40) de chauffage pouvant être couplé thermiquement avec le circuit thermique de mécanisme propulseur (10) et/ou le circuit thermique de générateur de courant (20) pour le chauffage d'un espace intérieur de véhicule.
